# EUROPEAN PATENT APPLICATION

(11) **EP 3 876 229 A2**
(43) Date of publication of application: **08.09.2021**
(21) Application number: 21180611.2
(22) Date of filing: 21.06.2021
(51) Int. Cl.: G10L 15/22

(54) **VEHICLE-BASED VOICE PROCESSING METHOD, VOICE PROCESSOR, AND VEHICLE-MOUNTED PROCESSOR**

(30) Priority: 15.12.2020 CN 202011476872
(71) Applicant: Apollo Intelligent Connectivity (Beijing) Technology Co., Ltd., Beijing (CN)
(72) Inventor: ZUO, Shengyong, Beijing (CN)
(74) Representative: Studio Torta S.p.A.

(57) **Abstract**

The present application discloses a vehicle-based voice processing method, a voice processor, a vehicle-mounted processor, a vehicle, an electronic device, and a storage medium, and relates to automatic driving, artificial intelligence, and voice technology in the computer field. The specific implementation is: receiving a voice message transmitted by the vehicle-mounted processor based on a plurality of audio channels, where the voice message carries identifiers of the plurality of audio channels; determining a multi-sound zone type corresponding to the voice message according to the identifiers of each audio channel in the voice message; invoking an audio processing method corresponding to the multi-sound zone type corresponding to the voice message to process the voice message so as to obtain a processing result; through determining a multi-sound zone type of voice message, and invoking an audio processing method of the multi-sound zone type corresponding to the voice message to process the voice message so as to obtain a processing result; through determining a multi-sound zone type of voice message, and invoking an audio processing method of the multi-sound zone type corresponding to the voice message to process the voice message.

## Description

### TECHNICAL FIELD

The present application relates to the field of computer technology, and in particular to a vehicle-based voice processing method, a voice processor, a vehicle-mounted processor, a vehicle, an electronic device, and a storage medium, which can be used for automatic driving, artificial intelligence, and voice technology in computer technology.

### BACKGROUND

With the development of artificial intelligence and automatic driving technology, vehicles can support voice control services, such as voice control of opening window, etc. The vehicle can support the processing of voice of a multi-sound zone type, for example, the vehicle can process voice of a dual-sound zone type, or the vehicle can process voice of a four-sound zone type.

In the prior art, the vehicle is equipped with a vehicle-mounted processor and a voice processor, and after receiving the voice, the vehicle-mounted processor transmits the voice to the voice processor for processing.

However, if the multi-sound zone type supported by the voice processor is different from the multi-sound zone type supported by the vehicle-mounted processor, the voice processor cannot process the voice transmitted from the vehicle-mounted processor, and further, the vehicle cannot process the voice.

### SUMMARY

The present application provides a vehicle-based voice processing method, a voice processor, a vehicle-mounted processor, a vehicle, an electronic device, and a storage medium for improving the reliability of voice processing.

According to one aspect of the present application, a vehicle-based voice processing method is provided, which is applied to a voice processor in a vehicle, where the vehicle is provided with the voice processor and a vehicle-mounted processor, and the voice processor supports audio processing methods for a variety of multi-sound zone types, the method includes:
receiving a voice message transmitted by the vehicle-mounted processor based on a plurality of audio channels, where the voice message carries identifiers of the plurality of audio channels;
determining a multi-sound zone type corresponding to the voice message according to the identifiers of each audio channel in the voice message; and
invoking an audio processing method corresponding to the multi-sound zone type corresponding to the voice message to process the voice message so as to obtain a processing result.

According to another aspect of the present application, a vehicle-based voice processing method is provided, which is applied to a vehicle-mounted processor in a vehicle, where the vehicle is provided with a voice processor and the vehicle-mounted processor, and the voice processor supports a variety of multi-sound zone types, the method includes:
determining, according to the multi-sound zone type supported by the vehicle-mounted processor, a plurality of audio channels for transmitting a received voice message;
transmitting the voice message to the voice processor based on the plurality of audio channels;
where the voice message is configured to determine a multi-sound zone type corresponding to the voice message according to identifiers of each audio channel in the voice message; and the multi-sound zone type corresponding to the voice message is used to process the voice message according to an audio processing method corresponding to the multi-sound zone type corresponding to the voice message, so as to obtain a processing result.

According to another aspect of the present application, a voice processor is provided, the voice processor is provided in a vehicle, the vehicle is further provided with a vehicle-mounted processor, the voice processor supports audio processing methods for a variety of multi-sound zone types, the voice processor includes:
a receiving module, configured to receive a voice message transmitted by the vehicle-mounted processor based on a plurality of audio channels, where the voice message carries identifiers of the plurality of audio channels;
a first determining module, configured to determine a multi-sound zone type corresponding to the voice message according to the identifiers of each audio channel in the voice message;
an invoking module, configured to invoke an audio processing method corresponding to the multi-sound zone type corresponding to the voice message; and
a processing module, configured to process the voice message according to the invoked audio processing method to obtain a processing result.

According to another aspect of the present application, a vehicle-mounted processor is provided, the vehicle-mounted processor is provided in a vehicle, the vehicle is further provided with a voice processor, the voice processor supports a variety of multi-sound zone types, and the vehicle-mounted processor includes:
a second determining module, configured to determine, according to the multi-sound zone type supported by the vehicle-mounted processor, a plurality of audio channels for transmitting a received voice message;
a transmitting module, configured to transmit the voice message to the voice processor based on the plurality of audio channels;
where the voice message is configured to determine a multi-sound zone type corresponding to the voice message according to identifiers of each audio channel in the voice message; and the multi-sound zone type corresponding to the voice message is used to process the voice message according to an audio processing method corresponding to the multi-sound zone type corresponding to the voice message, so as to obtain a processing result.

According to another aspect of the present application, an electronic device is provided, including:
at least one processor; and
a memory communicatively connected with the at least one processor; where,
the memory stores instructions executable by the at least one processor, the instructions being executed by the at least one processor to enable the at least one processor to execute the method as described in any one of the above embodiments.

According to another aspect of the present application, a non-transitory computer-readable storage medium storing computer instructions is provided, where the computer instructions are used to cause the computer to execute the method as described in any one of the above embodiments.

According to another aspect of the present application, a computer program product is provided, including a computer program, which, when executed by a processor, implements the method as described in any one of the above embodiments.

According to another aspect of the present application, a vehicle is provided, including:
the voice processor as described in any one of the above embodiments;
the vehicle-mounted processor as described in any one of the above embodiments.

It should be understood that the content described in this section is not intended to identify the key or important features of embodiments of the present application, nor is it intended to limit the scope of the present application. Other features of the present application will be easily understood from the following description.

### BRIEF DESCRIPTION OF THE DRAWINGS

The drawings are for better understanding the present solution, and do not constitute a limitation to the present application. Among them:
FIG. 1 is a schematic diagram according to a first embodiment of the present application;
FIG. 2 is a schematic diagram according to a second embodiment of the present application;
FIG. 3 is a schematic diagram according to a third embodiment of the present application;
FIG. 4 is a schematic diagram according to a fourth embodiment of the present application;
FIG. 5 is a schematic diagram of the principle of a vehicle-based voice processing method according to an embodiment of the present application;
FIG. 6 is a schematic diagram according to a fifth embodiment of the present application;
FIG. 7 is a schematic diagram according to a sixth embodiment of the present application;
FIG. 8 is a schematic diagram according to a seventh embodiment of the present application;
FIG. 9 is a schematic diagram according to an eighth embodiment of the present application;
FIG. 10 is a schematic diagram according to a ninth embodiment of the present application; and
FIG. 11 is a schematic diagram according to a tenth embodiment of the present application.

### DESCRIPTION OF EMBODIMENTS

Exemplary embodiments of the present application are described below with reference to the drawings, including various details of the embodiments of the present application to facilitate understanding, which should be considered as merely exemplary. Therefore, those of ordinary skill in the art should recognize that various changes and modifications can be made to the embodiments described herein without departing from the scope and spirit of the present application. Likewise, for the sake of clarity and conciseness, descriptions of well-known functions and structures are omitted in the following description.

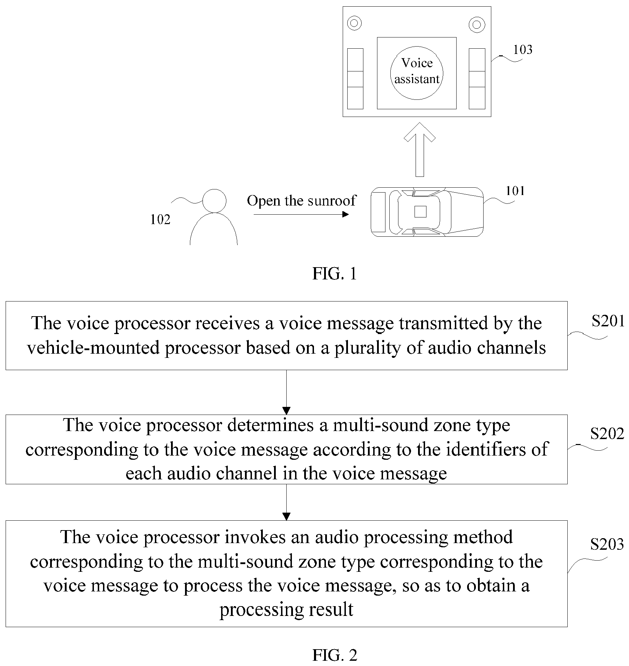

FIG. 1 is a schematic diagram according to a first embodiment of the present application, as shown in FIG. 1, in the application scenario of the vehicle-based voice processing method of the embodiment of the present application, the user 102 in vehicle 101 can initiate a voice message (such as the voice message of "open the sunroof") to the vehicle-mounted processor 103 provided in the vehicle 101 based on a voice recognition device (such as a microphone (not shown in the figure), etc.) provided in the vehicle 101. and accordingly, the vehicle-mounted processor 103 can transmit the voice message to the voice processor (not shown in the figure) provided in the vehicle 101, the voice processor performs processing (such as parsing the voice message, etc.) to obtain a processing result, and controls the vehicle to perform an operation (such as operation of controlling the vehicle 101 to open the sunroof, etc.) based on the processing result accordingly.

It is worth noting that the above examples are only used to exemplify the possible application scenarios of the vehicle-based voice processing method of this embodiment, and cannot be understood as a limitation on the application scenarios of this embodiment. For example, in some embodiments, the voice processor can transmit the processing result to a controller provided in the vehicle 102, and the controller controls the opening operation of the sunroof, etc.

With the development of artificial intelligence and automatic driving technology, different vehicles can support different multi-sound zone types, for example, some vehicles support dual-sound zone type, some vehicles support four-sound zone types, and the audio processing method for different multi-sound zone type are different.

In the related art, the adopted method is to configure the corresponding vehicle-mounted processor and voice processor according to the multi-sound zone type supported by the vehicle.

However, on the one hand, the audio processing method lacks versatility; on the other hand, the vehicle-mounted processor and the voice processor need to be updated at the same time, otherwise the vehicle-mounted processor and the voice processor will not adapt, thereby unable to complete the voice processing.

The inventor of the present application got the inventive concept of the present application through creative labor: both the voice processor and the vehicle-mounted processor support the audio processing methods for a variety of multi-sound zone types, and invoke different audio processing methods for different multi-sound zone types for processing, thereby achieving flexibility of audio processing and saving adaptation cost.

The present application provides a vehicle-based voice processing method, a voice processor, a vehicle-mounted processor, a vehicle, an electronic device, and a storage medium, which are applied to automatic driving, artificial intelligence, and voice technology in the field of computer technology to achieve the technical effects of flexibility and diversity of voice processing.

The technical solution of the present application and how the technical solution of the present application solves the above technical problems will be described in detail below with reference to specific embodiments. The following specific embodiments can be combined with each other, and the same or similar concepts or processes may not be repeated in some embodiments. The embodiments of the present application will be described below in conjunction with the accompanying drawings.

FIG. 2 is a schematic diagram according to a second embodiment of the present application, as shown in FIG. 2, a vehicle-based voice processing method of an embodiment of the present application is applied to a voice processor in a vehicle, where the vehicle is provided with the voice processor and a vehicle-mounted processor, and the voice processor supports audio processing methods for a variety of multi-sound zone types, the method includes:
S201: the voice processor receives a voice message transmitted by the vehicle-mounted processor based on a plurality of audio channels,
where the voice message carries the identifiers of a plurality of audio channels.

Exemplarily, the executive body of this embodiment may be a voice processor, and the voice processor may specifically be a chip.

In this embodiment, the voice processor can support an audio processing method for a variety of sound zone types. For example, the voice processor can support an audio processing method for dual-sound zone type, or an audio processing method for four-sound zone type, and the like.

For example, the audio processing method for dual-sound zone type and the audio processing method for four-sound zone type can be separately written into the voice processor (for example, written into the memory of the voice processor), and the voice processor can invoke the audio processing method for dual-sound zone type or invoke the audio processing method for four-sound zone type based on requirements.

A plurality of audio channels are included between the voice processor and the vehicle-mounted processor, so as to realize the transmission of voice message based on a plurality of audio channels. Specifically, the vehicle-mounted processor can transmit the voice message to the voice processor based on the plurality of audio channels and the voice message can carry the identifiers of the plurality of audio channels through which the voice message pass. Accordingly, the voice processor can obtain the identifiers of the plurality of audio channels for transmitting the voice message while receiving the voice message.

S202: the voice processor determines a multi-sound zone type corresponding to the voice message according to the identifiers of each audio channel in the voice message.

This step can be understood as: after receiving the voice message and obtaining the identifiers of the plurality of audio channels carried in the voice message, the voice processor can determine whether the voice message corresponds to a voice message of a dual-sound zone type or a voice message of a four-sound zone type based on the identifiers of the plurality of audio channels.

S203: the voice processor invokes an audio processing method corresponding to the multi-sound zone type corresponding to the voice message to process the voice message, so as to obtain a processing result.

In combination with the above examples, the voice processor contains audio processing methods of different multi-sound zone types. Therefore, if the voice message determined by the voice processor is a voice message of a dual-sound zone type, the voice processor invokes the audio processing method corresponding to the dual-sound zone type, to process the voice message and obtain a processing result; if the voice message determined by the voice processor is a voice message of a four-sound zone type, the voice processor invokes the audio processing method corresponding to the four-sound zone type, to process the voice message and obtain a processing result.

Based on the above analysis, the embodiment of the present application provides a vehicle-based voice processing method, which is applied to a voice processor in a vehicle, where the vehicle is provided with the voice processor and a vehicle-mounted processor, and the voice processor supports audio processing methods for a variety of multi-sound zone types, the method includes: receiving a voice message transmitted by the vehicle-mounted processor based on a plurality of audio channels, where the voice message carries identifiers of the plurality of audio channels; determining a multi-sound zone type corresponding to the voice message according to the identifiers of each audio channel in the voice message; invoking an audio processing method corresponding to the multi-sound zone type corresponding to the voice message to process the voice message so as to obtain a processing result, through the voice processor supporting audio processing methods of a variety of sound zone types determines a multi-sound zone type corresponding to the voice message based on the identifiers of each audio channel and invokes an audio processing method corresponding to the multi-sound zone type corresponding to the voice message to process the voice message, the problem of low flexibility of voice processing caused by the audio processing method that the voice processor and the vehicle-mounted processor support the unified multi-sound zone type in the related art is avoided, the technical effect of improving the flexibility and diversity of voice processing is realized, and the voice interaction experience of users is improved.

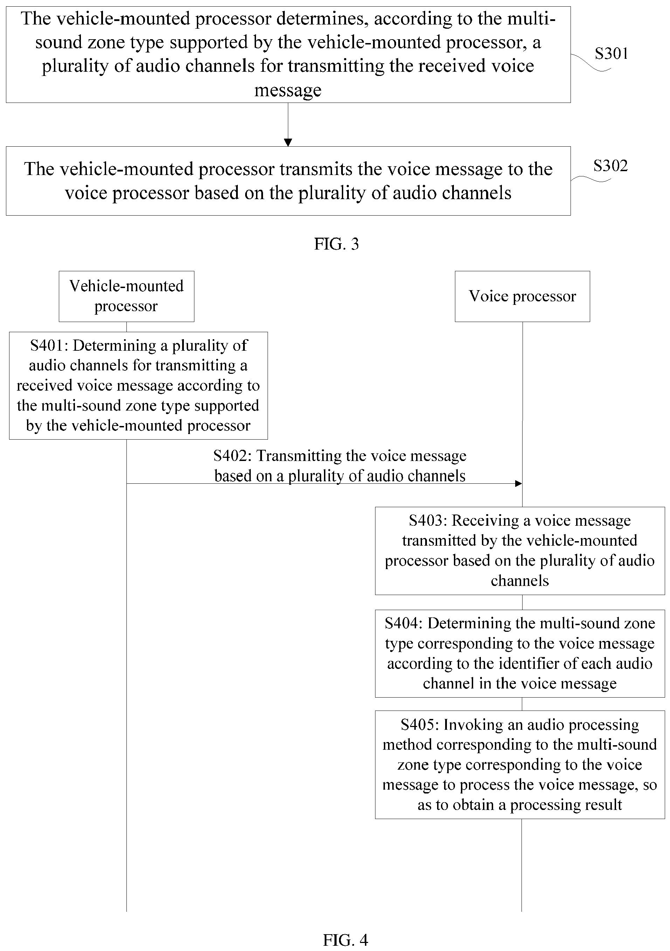

FIG. 3 is a schematic diagram according to a third embodiment of the present application, as shown in FIG. 3, the vehicle-based voice processing method of an embodiment of the present application includes:
S301: the vehicle-mounted processor determines, according to the multi-sound zone type supported by the vehicle-mounted processor, a plurality of audio channels for transmitting the received voice message.

Exemplarily, the executive body of this embodiment may be a vehicle-mounted processor, and the vehicle-mounted processor may be a chip, such as a chip provided in a vehicle-mounted terminal.

This step can be understood as: after receiving the voice message, the vehicle-mounted terminal can determine a corresponding plurality of audio channels based on the multi-sound zone type supported by the vehicle-mounted terminal.

For example, if the multi-sound zone type supported by the vehicle-mounted processor is a dual-sound zone type, a plurality of audio channels for transmitting the voice message are determined based on the dual-sound zone type; if the multi-sound zone type supported by the vehicle-mounted processor is a four-sound zone type, a plurality of audio channels for transmitting the voice message are determined based on the four-sound zone type.

S302: the vehicle-mounted processor transmits the voice message to the voice processor based on the plurality of audio channels.
where the voice message is configured to determine a multi-sound zone type corresponding to the voice message according to identifiers of each audio channel in the voice message; the multi-sound zone type corresponding to the voice message is used to process the voice message according to an audio processing method corresponding to the multi-sound zone type corresponding to the voice message, so as to obtain a processing result.

That is to say, the vehicle-mounted processor transmits the voice message to the voice processor through the plurality of audio channels determined by S301. The voice message carries the identifiers of each audio channel for transmitting the voice message, and the voice processor can determine the multi-sound zone type corresponding to the voice message based on the identifiers of each audio channel, and select the corresponding audio processing method based on the multi-sound zone type corresponding to the voice message, so as to process the voice message based on the selected audio processing method to obtain a processing result, and further control the vehicle to perform corresponding business operations based on the processing result, and so on.

It is worth noting that in this embodiment, through the plurality of audio channels for transmitting the received voice message are determined based on the multi-sound zone type supported by the vehicle-mounted processor, and the voice message is transmitted to the voice processor based on the determined plurality of audio channels, thus the flexibility and convenience of voice message transmission can be improved, and the reliability of voice processing is further improved.

FIG. 4 is a schematic diagram according to a fourth embodiment of the present application, as shown in FIG. 4, the vehicle-based voice processing method of an embodiment of the present application includes:
S401: the vehicle-mounted processor determines a plurality of audio channels for transmitting the received voice message according to the multi-sound zone type supported by the vehicle-mounted processor.

Exemplarily, after receiving the voice message, the vehicle-mounted processor can determine the corresponding plurality of audio channels based on the multi-sound zone type supported by the vehicle-mounted processor.

For example, if the multi-sound zone type supported by the vehicle-mounted processor is a dual-sound zone type, the plurality of audio channels for transmitting the voice message are determined based on the dual-sound zone type; if the multi-sound zone type supported by the vehicle-mounted processor is a four-sound zone type, the plurality of audio channels for transmitting the voice message are determined based on the four-sound zone type.

In some embodiments, the total quantity of the audio channels between the vehicle-mounted processor and the voice processor is greater than or equal to the quantity of audio channels corresponding to the highest-level multi-sound zone type.

For example, if the highest-level multi-sound zone type is a four-sound zone type, the total quantity of audio channels is 8.

It is worth noting that, in this embodiment, by setting the quantity of audio channels to be greater than or equal to the quantity of audio channels corresponding to the highest-level multi-sound zone type, the adaptation between the vehicle-mounted processor and the voice processor supporting each multi-sound zone type can be realized, thereby achieving the technical effect of improving flexibility and efficiency of voice processing, and reducing the maintenance cost of the vehicle-mounted processor and the voice processor respectively.

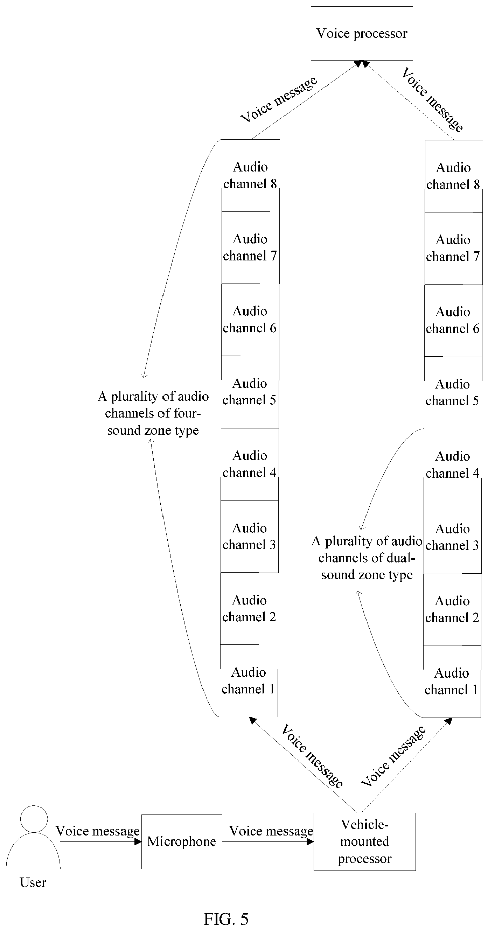

FIG. 5 is a schematic diagram of the principle of a vehicle-based voice processing method according to an embodiment of the present application, as shown in FIG. 5, a microphone (or other sound pickup device) provided on the vehicle can collect voice messages initiated by a user and transmit the voice message to the vehicle-mounted processor; accordingly, the vehicle-mounted processor receives the voice message transmitted by the microphone, selects, according to the multi-sound zone type supported by the vehicle-mounted processor, a plurality of audio channels from a plurality of audio channels (such as 8 audio channels of audio channel 1 to audio channel 8 as shown in FIG. 5), and transmits the voice message to the voice processor through the selected plurality of audio channels.

Further, as shown in FIG. 5, if the multi-sound zone type supported by the vehicle-mounted processor is a dual-sound zone type, the vehicle-mounted processor can select 4 audio channels (a plurality of audio channels of the dual-sound zone type as shown in FIG. 5) from 8 audio channels, and transmit the voice message to the voice processor through the 4 audio channels; if the multi-sound zone type supported by the vehicle-mounted processor is a four-sound zone type, the vehicle-mounted processor can transmit the voice message to the voice processor through 8 audio channels (a plurality of audio channels of the four-sound zone type as shown in FIG. 5).

It is worth noting that FIG. 5 is only used to exemplify the audio channel that can be selected for transmitting the voice message, but cannot be understood as a limitation on the audio channel.

In an example, each audio channel corresponds to a unique identifier of an audio channel, S401 can include: determining a combination formed by the identifiers of each audio channel for transmitting the voice message corresponding to the multi-sound zone type supported by the vehicle-mounted processor according to the preset mapping relationship; and determining the plurality of audio channels for transmitting the voice message according to the formed combination.

Among them, the mapping relationship is a mapping relationship between different combinations formed by the identifiers of audio channels and different multi-sound zone types.

That is to say, in some embodiments, the mapping relationship may be pre-stored in the vehicle-mounted processor, the mapping relationship can represent an association relationship between different combinations formed by identifiers of the audio channels and different multi-sound zone types. That is to say, for different multi-sound zone types, the formed combination can be determined from the mapping relationship, and the plurality of audio channels can be selected based on the formed combination.

For example, in combination with the schematic diagram as shown in FIG. 5, there are 8 audio channels, and each audio channel has a unique identifier, such as identifier 1 to identifier 8, if the vehicle-mounted processor determines, based on the mapping relationship, that the formed combination corresponding to a dual-sound zone type is: identifier 1 to identifier 4, the vehicle-mounted processor selects the 4 audio channels of identifier 1 to identifier 4 for transmitting the voice message to the voice processor; if the vehicle-mounted processor determines, based on the mapping relationship, that the formed combination corresponding to a dual-sound zone type is: identifier 1, identifier 2, identifier 4, and identifier 6, the vehicle-mounted processor selects the 4 audio channels of identifier 1, identifier 2, identifier 4, and identifier 6 for transmitting the voice message to the voice processor, and so on, and will not be listed one by one herein.

It is worth noting that, in this embodiment, through the audio channels for transmitting the voice message are determined based on the mapping relationship between the formed combination and the multi-sound zone type, so as to transmit the voice message to the voice processor based on the audio channels, the flexibility and diversity for determining audio channels for transmitting the voice message can be improved.

In the above examples, one audio channel has one unique identifier, in other embodiments, the identifiers of the audio channels for transmitting the multi-channel audio signals are the same, and the identifiers of the audio channels for transmitting the multi-channel reference signals are the same; the identifiers of the audio channels for transmitting the multi-channel audio signals and the identifiers of the audio channels for transmitting the multi-channel reference signals are different.

In another example, S401 can include: determining a quantity of the audio channels for transmitting the voice message according to the multi-sound zone type supported by the vehicle-mounted processor; and selecting a plurality of audio channels for transmitting the voice message from a plurality of preset audio channels according to the quantity of audio channels.

That is to say, in some embodiments, the vehicle-mounted processor can determine the quantity of audio channels based on the multi-sound zone type supported by the vehicle-mounted processor, and select a corresponding quantity of audio channels from all the audio channels to transmit the voice message to the voice processor.

Exemplarily, the quantity of audio channels corresponding to different multi-sound zone types is different. For example, the quantity of audio channels corresponding to the dual-sound zone type is 4, i.e., for a voice message of a dual-sound zone type, the vehicle-mounted processor can transmit the voice message to the voice processor through 4 audio channels; for another example, the quantity of audio channels corresponding to the four-sound zone type is 8, i.e., for a voice message of a four-sound zone type, the vehicle-mounted processor can transmit the voice message to the voice processor through 8 audio channels, and so on.

For example, in combination with the schematic diagram as shown in FIG. 5, there are 8 audio channels, if the multi-sound zone type supported by the vehicle-mounted processor is a dual-sound zone type, the vehicle-mounted processor determines that the voice message needs to be transmitted to the processor through 4 audio channels; accordingly, the vehicle-mounted processor can randomly select 4 audio channels from the 8 audio channels, and transmit the voice message to the voice processor through the 4 randomly selected audio channels; or, the vehicle-mounted processor can also pre-set 4 audio channels for transmitting the dual-sound zone type, and transmit the voice message to the voice processor based on the 4 set audio channels, and so on.

It is worth noting that, in this embodiment, through the audio channels for transmitting the voice message are determined based on the quantity of audio channels corresponding to the multi-sound zone type, so as to transmit the voice message to the voice processor based on the audio channels, the audio channels for transmitting the voice message can be determined quickly and conveniently, thereby achieving the technical effect of improving the efficiency of voice processing.

In another example, the voice message includes: multi-channel audio signals and multi-channel reference signals, and one-channel signal is transmitted by one audio channel; S401 can include: according to the multi-sound zone type supported by the vehicle-mounted processor, determining each audio channel for transmitting the multi-channel audio signals, and determining each audio channel for transmitting the multi-channel reference signal.

That is to say, in some embodiments, a plurality of audio channels for transmitting multi-channel audio signals can be determined, and a plurality of audio channels for transmitting multi-channel reference signals can be determined, from a plurality of audio channels respectively.

For example, in combination with the schematic diagram as shown in FIG. 5, based on the multi-sound zone type supported by the vehicle-mounted processor, the vehicle-mounted processor can determine a plurality of audio channels for transmitting multi-channel audio signals from the 8 audio channels, and determine a plurality of audio channels for transmitting multi-channel reference signals from the 8 audio channels.

In this embodiment, by separately selecting a plurality of audio channels for transmitting multi-channel audio signals and multi-channel reference signals, the diversity and flexibility of determining the audio channels can be improved.

In some embodiments, determining, according to the multi-sound zone type supported by the vehicle-mounted processor, each audio channel for transmitting the multi-channel audio signal may include the following steps:
Step 1: determining a quantity of the audio channels for transmitting the multi-channel audio signals according to the multi-sound zone type supported by the vehicle-mounted processor.

For example, if the multi-sound zone type supported by the vehicle-mounted processor is a dual-sound zone type, the vehicle-mounted processor can determine that the quantity of audio channels for transmitting multi-channel audio signals is 2, i.e., the multi-channel audio signals are transmitted to the voice processor through the 2 audio channels; if the multi-sound zone type supported by the vehicle-mounted processor is a four-sound zone type, the vehicle-mounted processor can determine that the quantity of audio channels for transmitting multi-channel audio signals is 4, i.e., the multi-channel audio signals are transmitted to the voice processor through the 4 audio channels, and so on.

Step 2: determining identifiers of the audio channels for transmitting the multi-channel audio signals according to the quantity of audio channels for transmitting the multi-channel audio signals.

Different quantities correspond to different identifiers for transmitting multi-channel audio signals. For example, if the quantity of audio channels for transmitting multi-channel audio signals is 2, the identifiers of the audio channels for transmitting multi-channel audio signals are determined under the condition that the quantity is 2.

Specifically, if the quantity of audio channels for transmitting multi-channel audio signals is 2, the identifiers of the audio channels for transmitting multi-channel audio signals are identifier 1 and identifier 2, respectively; if the quantity of audio channels for transmitting multi-channel audio signals is 4, the identifiers of the audio channels for transmitting multi-channel audio signals are identifier 1 to identifier 4 respectively, and so on.

Step 3: selecting each audio channel for transmitting the multi-channel audio signals from each audio channel based on the determined identifiers.

Accordingly, after the identifiers of the audio channel for transmitting multi-channel audio signals are determined, the vehicle-mounted processor can select each audio channel of the corresponding identifier from each audio channel, and based on the each selected audio channel, transmit the multi-channel audio signals to the voice processor.

In this embodiment, by determining the identifiers based on the quantity of audio channels for transmitting multi-channel audio signals, and selecting each audio channel based on the identifier, the technical effect of the diversity and flexibility of selecting the audio channels for transmitting multi-channel audio signals can be achieved.

Similarly, in some embodiments, determining, according to the multi-sound zone type supported by the vehicle-mounted processor, each audio channel for transmitting the multi-channel reference signal may include the following steps:
Step 1: determining a quantity of audio channels for transmitting the multi-channel reference signal according to the multi-sound zone type supported by the vehicle-mounted processor.

Similarly, if the multi-sound zone type supported by the vehicle-mounted processor is a dual-sound zone type, the vehicle-mounted processor can determine that the quantity of audio channels for transmitting multi-channel reference signals is 2, i.e., the multi-channel reference signals are transmitted to the voice processor through the 2 audio channels; if the multi-sound zone type supported by the vehicle-mounted processor is a four-sound zone type, the vehicle-mounted processor can determine that the quantity of audio channels for transmitting multi-channel reference signals is 4, i.e., the multi-channel reference signals are transmitted to the voice processor through the 4 audio channels, and so on.

Step 2: determining identifiers of the audio channels for transmitting the multi-channel reference signals according to the quantity of audio channels for transmitting the multi-channel reference signals.

Similarly, different quantities correspond to different identifiers for transmitting multi-channel reference signal. For example, if the quantity of audio channels for transmitting multi-channel reference signals is 2, the identifiers of the audio channels for transmitting multi-channel reference signals are determined under the condition that the quantity is 2.

Specifically, if the quantity of audio channels for transmitting multi-channel reference signals is 2, the identifiers of the audio channels for transmitting multi-channel reference signals are identifier 1 and identifier 2, respectively; if the quantity of audio channels for transmitting multi-channel reference signals is 4, the identifiers of the audio channels for transmitting multi-channel reference signals are identifier 1 to identifier 4 respectively, and so on.

Step 3: selecting each audio channel for transmitting the multi-channel reference signals from each audio channel based on the determined identifiers.

Similarly, accordingly, after the identifiers of the audio channel for transmitting multi-channel reference signals are determined, the vehicle-mounted processor can select each audio channel of the corresponding identifier from each audio channel, and transmit, based on the each selected audio channel, the multi-channel reference signals to the voice processor.

Similarly, in this embodiment, by determining the identifiers based on the quantity of audio channels for transmitting multi-channel reference signals, and selecting each audio channel based on the identifier, the technical effect of the diversity and flexibility of selecting the audio channels for transmitting multi-channel reference signals can be achieved.

Based on the above examples, the voice message may include: multi-channel audio signals and multi-channel reference signals. In some embodiments, an adjacent channel of an audio channel for transmitting each audio signal is an audio channel for transmitting a reference signal.

In other words, in some embodiments, different signals are transmitted in adjacent audio channels. For example, in combination with the schematic diagram as shown in FIG. 5, first audio channel of the 8 audio channels can transmit an audio signal, second audio channel can transmit a reference signal, and third audio channel can transmit an audio signal, and so on, which won't be listed one by one this time.

In an example, if the multi-sound zone type supported by the vehicle-mounted processor is a dual-sound zone type, the quantity of the plurality of audio channels is four, and a first audio channel and a third audio channel are configured to transmit audio signals, and a second audio channel and a fourth audio channel are configured to transmit reference signals.

In another example, if the multi-sound zone type supported by the vehicle-mounted processor is a four-sound zone type, the quantity of the plurality of audio channels is eight, and a first audio channel, a third audio channel, a fifth audio channel and a seventh audio channel configured to transmit audio signals, and a second audio channel, a fourth audio channel, a sixth audio channel, and an eighth audio channel are configured to transmit reference signals.

It is worth noting that, in this embodiment, by transmitting different signals through adjacent channels, on the one hand, the voice processor can directly perform corresponding analysis and other operations after receiving the audio signal and the reference signal, so as to improve the audio processing efficiency; on the other hand, the interference of information between audio channels can be avoided, thereby achieving the technical effect of improving the accuracy and reliability of operations (such as parsing) by the voice processor.

S402: the vehicle-mounted processor transmits the voice message to the voice processor based on a plurality of audio channels,

Among them, the voice message carries the identifiers of the plurality of audio channels.

This step can be understood as: after determining the plurality of audio channels for transmitting the voice message based on the above-mentioned methods, the vehicle-mounted processor transmits the voice message to the voice processor based on the determined plurality of audio channels, and accordingly, the voice processor receives the voice messages transmitted by the vehicle-mounted processor.

S403: the voice processor receives a voice message transmitted by the vehicle-mounted processor based on the plurality of audio channels,

Among them, the voice message carries the identifiers of a plurality of audio channels.

Exemplarily, the description about S403 can refer to S201, which will not be repeated herein.

S404: the voice processor determines the multi-sound zone type corresponding to the voice message according to the identifiers of each audio channel in the voice message.

In an example, the description about S404 can refer to S202, which will not be repeated herein.

In another example, based on the above analysis, the vehicle-mounted processor can determine each audio channel for transmitting the voice message based on the mapping relationship, accordingly, the voice processor can determine the multi-sound zone type corresponding to the voice message based on the mapping relationship, i.e., S404 can include: the voice processor determines, a multi-sound zone type corresponding to a combination formed by the identifiers of each audio channel in the voice message according to a preset mapping relationship; where the mapping relationship is a mapping relationship between different combinations formed by identifiers of the audio channels and different multi-sound zone types.

For the specific implementation principle of this embodiment, please refer to the description on the vehicle-mounted processor side, which will not be repeated herein.

Similarly, in another example, S404 can include: determining, according to a total quantity of audio channel identifiers in the voice message, a multi-sound zone type corresponding to the total quantity.

Similarly, in a further example, the voice message includes: multi-channel audio signals and multi-channel reference signals, and one-channel signal is transmitted by one audio channel; S404 can include:
determining a multi-sound zone type corresponding to the voice message according to the identifiers of each audio channel for transmitting the multi-channel audio signals; and/or,
determining the multi-sound zone type corresponding to the voice message according to the identifiers of each audio channel for transmitting the multi-channel reference signals.

Similarly, in some embodiments, the determining a multi-sound zone type corresponding to the voice message according to the identifiers of each audio channel for transmitting the multi-channel audio signals, includes: determining the multi-sound zone type corresponding to the voice message based on a quantity of the identifiers of audio channels that transmits the multi-channel audio signals.

Similarly, in some embodiments, the determining a multi-sound zone type corresponding to the voice message according to the identifiers of each audio channels for transmitting the multi-channel reference signals, includes: determining the multi-sound zone type corresponding to the voice message based on a quantity of the identifiers of audio channels that transmits the multi-channel reference signals.

Similarly, in some embodiments, the voice message includes: multi-channel audio signals and multi-channel reference signals; where an adjacent audio channel of the audio channel for transmitting an audio signal is an audio channel for transmitting a reference signal.

Similarly, in an example, if the multi-sound zone type supported by the vehicle-mounted processor is a dual-sound zone type, the quantity of the plurality of audio channels is four, and a first audio channel and a third audio channel are configured to transmit audio signals, and a second audio channel and a fourth audio channel are configured to transmit reference signals.

In another example, if the multi-sound zone type supported by the vehicle-mounted processor is a four-sound zone type, the quantity of the plurality of audio channels is eight, and a first audio channel, a third audio channel, a fifth audio channel and a seventh audio channel configured to transmit audio signals, and a second audio channel, a fourth audio channel, a sixth audio channel, and an eighth audio channel are configured to transmit reference signals.

S405: the voice processor invokes an audio processing method corresponding to the multi-sound zone type corresponding to the voice message to process the voice message, so as to obtain a processing result.

Exemplarily, the description about S405 can refer to S203, which will not be repeated herein.

In some embodiments, the audio processing method may include a noise reduction processing method, i.e., a dual-sound zone type corresponds to a noise reduction processing method for dual-sound zone, and a four-sound zone type corresponds to a noise reduction processing method for four-sound zone, accordingly, for voice message of the dual-sound zone type, the voice processor invokes the noise reduction processing method for two-sound zone to perform noise reduction processing; for voice message of the four-sound zone type, the voice processor invokes the noise reduction processing method for four-sound zone to perform noise reduction processing.

Further, in combination with the application scenario as shown in FIG. 1 and the corresponding description, in some embodiments, after performing processing on the voice message to obtain a processing result, the voice processor can control a vehicle to perform business operations (such as opening the sunroof) corresponding to the processing result based on the processing result.

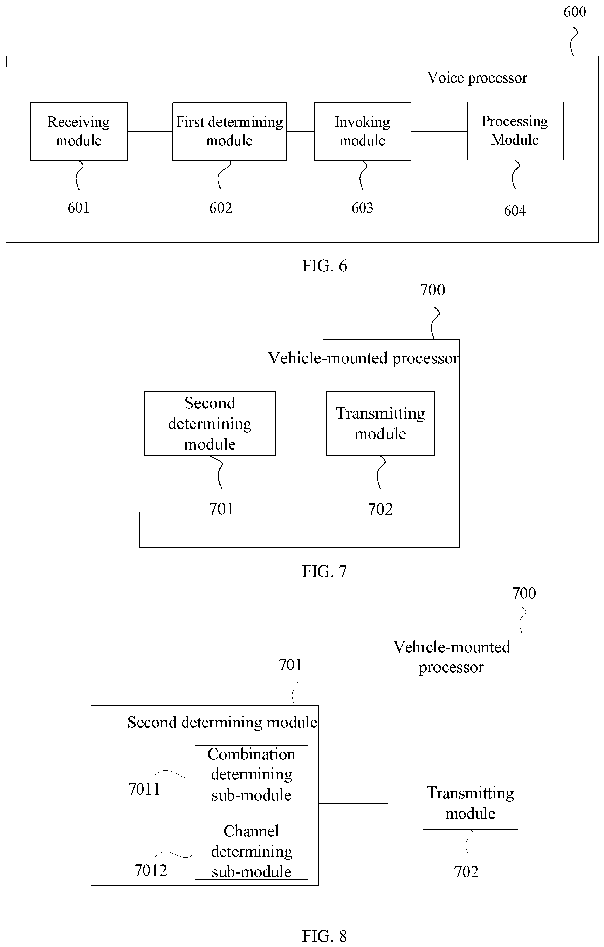

FIG. 6 is a schematic diagram according to a fifth embodiment of the present application, as shown in FIG. 6, the voice processor 600 of the embodiment of the present application includes:
a receiving module 601, configured to receive a voice message transmitted by the vehicle-mounted processor based on a plurality of audio channels, where the voice message carries identifiers of the plurality of audio channels,
where the voice processor is set in the vehicle, and the vehicle is also provided with a vehicle-mounted processor, and the voice processor supports a variety of audio processing methods for multi-sound zone types;
a first determining module 602, configured to determine a multi-sound zone type corresponding to the voice message according to the identifiers of each audio channel in the voice message;
an invoking module 603, configured to invoke an audio processing method corresponding to the multi-sound zone type corresponding to the voice message; and
a processing module 604, configured to process the voice message according to the invoked audio processing method to obtain a processing result.

In some embodiments, the first determining module 602 is configured to determine, according to a preset mapping relationship, a multi-sound zone type corresponding to a combination formed by the identifiers of each audio channel in the voice message,
where the mapping relationship is a mapping relationship between different combinations formed by the identifiers of audio channels and different multi-sound zone types.

In some embodiments, the first determining module 602 is configured to determine, according to a total quantity of the identifiers of audio channels in the voice message, a multi-sound zone type corresponding to the total quantity.

In some embodiments, the voice message includes multi-channel audio signals and multi-channel reference signals, and one-channel signal is transmitted by one audio channel; the first determining module 602 is configured to determine a multi-sound zone type corresponding to the voice message according to the identifiers of each audio channel for transmitting the multi-channel audio signals; and/or,
determine the multi-sound zone type corresponding to the voice message according to the identifiers of each audio channel for transmitting the multi-channel reference signals.

In some embodiments, the first determining module 602 is configured to determine the multi-sound zone type corresponding to the voice message based on a quantity of the identifiers of each audio channel that transmits the multi-channel audio signals.

In some embodiments, the first determining module 602 is configured to determine the multi-sound zone type corresponding to the voice message based on a quantity of the identifiers of each audio channel that transmits the multi-channel reference signals.

In some embodiments, the voice message includes multi-channel audio signals and multi-channel reference signals; where an adjacent audio channel of the audio channel for transmitting an audio signal is an audio channel for transmitting a reference signal.

In some embodiments, the voice message includes an audio signal and a reference signal;
in a case that the multi-sound zone type supported by the vehicle-mounted processor is a dual-sound zone type, a quantity of the plurality of audio channels is four, and a first audio channel and a third audio channel are configured to transmit the audio signals, and a second audio channel and a fourth audio channel are configured to transmit the reference signals.

In some embodiments, the voice message includes an audio signal and a reference signal;
in a case that the multi-sound zone type supported by the vehicle-mounted processor is a four-sound zone type, a quantity of the plurality of audio channels is eight, and a first audio channel, a third audio channel, a fifth audio channel and a seventh audio channel configured to transmit the audio signals, and a second audio channel, a fourth audio channel, a sixth audio channel, and an eighth audio channel are configured to transmit the reference signals.

In some embodiments, a total quantity of audio channels between the vehicle-mounted processor and the voice processor is greater than or equal to a quantity of audio channels corresponding to a highest-level multi-sound zone type.

FIG. 7 is a schematic diagram according to a sixth embodiment of the present application, as shown in FIG. 7, the vehicle-mounted processor 700 of the embodiment of the present application includes:
a second determining module 701, configured to determine, according to the multi-sound zone type supported by the vehicle-mounted processor, a plurality of audio channels for transmitting a received voice message,
where the vehicle-mounted processor is set in the vehicle, and the vehicle is also provided with a voice processor, and the voice processor supports a variety of multi-sound zone types.
a transmitting module 702, configured to transmit the voice message to the voice processor based on the plurality of audio channels,
where the voice message is configured to determine a multi-sound zone type corresponding to the voice message according to identifiers of each audio channel in the voice message; and the multi-sound zone type corresponding to the voice message is used to process the voice message according to an audio processing method corresponding to the multi-sound zone type corresponding to the voice message, so as to obtain a processing result.

FIG. 8 is a schematic diagram according to a seventh embodiment of the present application, as shown in FIG. 8, on the basis of the sixth embodiment, each audio channel corresponds to a unique identifier of an audio channel, and the second determining module 701 includes:
a combination determining sub-module 7011, configured to determine a combination formed by the identifiers of each audio channel for transmitting the voice message corresponding to the multi-sound zone type supported by the vehicle-mounted processor according to a preset mapping relationship;
a channel determining sub-module 7012, configured to determine the plurality of audio channels for transmitting the voice message according to the formed combination; where the mapping relationship is a mapping relationship between different combinations formed by the identifiers of audio channels and different multi-sound zone types.

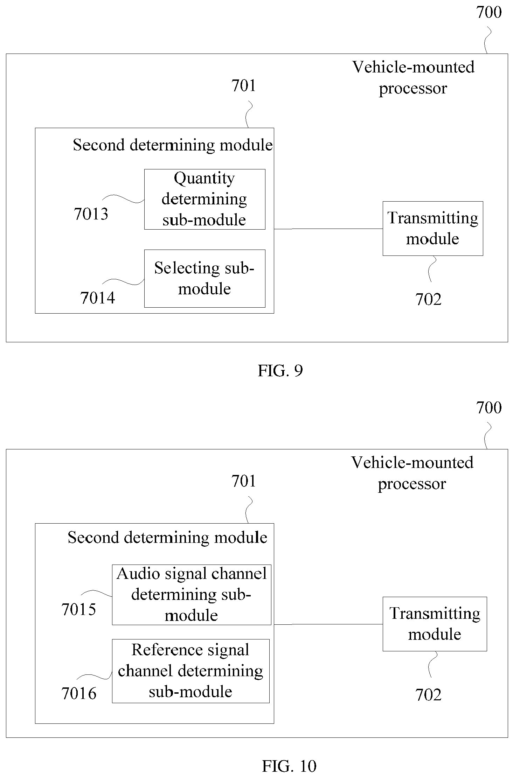

FIG. 9 is a schematic diagram according to an eighth embodiment of the present application, as shown in FIG. 9, on the basis of the sixth embodiment, the second determining module 701 includes:
a quantity determining sub-module 7013, configured to determine a quantity of audio channels for transmitting the voice message according to the multi-sound zone type supported by the vehicle-mounted processor;
a selecting sub-module 7014, configured to select a plurality of audio channels for transmitting the voice message from a plurality of preset audio channels according to the quantity of audio channels.

FIG. 10 is a schematic diagram according to a ninth embodiment of the present application, as shown in FIG. 10, on the basis of the sixth embodiment, the voice message includes multi-channel audio signals and multi-channel reference signals, and one-channel signal is transmitted by one audio channel; the second determining module 701 includes:
an audio signal channel determining sub-module 7015, configured to determine each audio channel for transmitting the multi-channel audio signals according to the multi-sound zone type supported by the vehicle-mounted processor;
a reference signal channel determining sub-module 7016, configured to determining each audio channel for transmitting the multi-channel reference signals according to the multi-sound zone type supported by the vehicle-mounted processor.

In some embodiments, the audio signal channel determining sub-module 7015 is configured to determine a quantity of the audio channel for transmitting the multi-channel audio signals according to the multi-sound zone type supported by the vehicle-mounted processor, and determine identifiers of the audio channels for transmitting the multi-channel audio signals according to the quantity of audio channels for transmitting the multi-channel audio signals, and select each audio channel for transmitting the multi-channel audio signals from each audio channel based on the determined identifiers.

In some embodiments, the reference signal channel determining sub-module 7016 is configured to determine a quantity of the audio channel for transmitting the multi-channel reference signals according to the multi-sound zone type supported by the vehicle-mounted processor, and determine identifiers of the audio channels for transmitting the multi-channel reference signals according to the quantity of audio channels for transmitting the multi-channel reference signals, and select each audio channel for transmitting the multi-channel reference signals from each audio channel based on the determined identifiers.

In some embodiments, the voice message includes multi-channel audio signals and multi-channel reference signals; where an adjacent audio channel of the audio channel for transmitting an audio signal is an audio channel for transmitting a reference signal.

In some embodiments, the voice message includes an audio signal and a reference signal;
in a case that the multi-sound zone type supported by the vehicle-mounted processor is a dual-sound zone type, a quantity of the plurality of audio channels is four, and a first audio channel and a third audio channel are configured to transmit the audio signals, and a second audio channel and a fourth audio channel are configured to the transmit reference signals.

In some embodiments, the voice message includes an audio signal and a reference signal;
in a case that the multi-sound zone type supported by the vehicle-mounted processor is a four-sound zone type, a quantity of the plurality of audio channels is eight, and a first audio channel, a third audio channel, a fifth audio channel and a seventh audio channel configured to transmit the audio signals, and a second audio channel, a fourth audio channel, a sixth audio channel, and an eighth audio channel are configured to transmit the reference signals.

In some embodiments, a total quantity of audio channels between the vehicle-mounted processor and the voice processor is greater than or equal to a quantity of audio channels corresponding to a highest-level multi-sound zone type.

According to the embodiments of the present application, the present application also provides an electronic device and a readable storage medium.

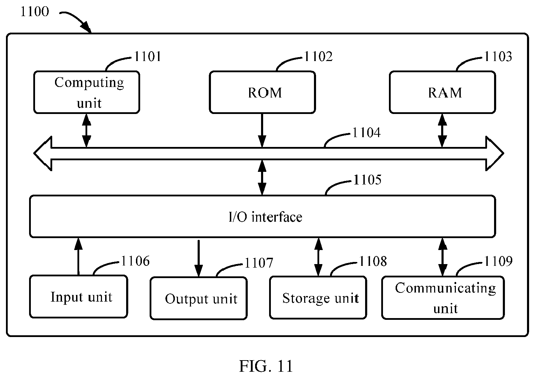

FIG. 11 shows a schematic block diagram of an example electronic device 1100 that can be used to implement the embodiments of the present application. Electronic devices are intended to represent various forms of digital computers, such as laptop computers, desktop computers, workstations, personal digital assistants, servers, blade servers, mainframe computers, and other suitable computers. Electronic devices can also represent various forms of mobile apparatuses, such as personal digital assistants, cellular phones, smart phones, wearable devices, and other similar computing apparatuses. The components shown herein, their connections and relationships, and their functions are merely examples, and are not intended to limit the implementations of the present disclosure described and/or required herein.

As shown in FIG. 11, the electronic device 1100 includes a computing unit 1101, which can perform various appropriate actions and processing based on a computer program stored in a read-only memory (ROM) 1102 or a computer program loaded from a storage unit 1108 into a random access memory (RAM) 1103. In the RAM 1103, various programs and data required for the operation of the device 1100 can also be stored. The computing unit 1101, the ROM 1102, and the RAM 1103 are connected to each other through a bus 1104. An input/output (I/O) interface 1105 is also connected to the bus 1104.

A plurality of components in the device 1100 are connected to the I/O interface 1105, including: an input unit 1106, such as a keyboard, a mouse, etc.; an output unit 1107, such as various types of displays, speakers, etc.; and a storage unit 1108, such as a magnetic disk, an optical disk, etc.; and a communicating unit 1109, such as a network card, a modem, a wireless communication transceiver, etc. The communicating unit 1109 allows the device 1100 to exchange information/data with other devices through a computer network such as the Internet and/or various telecommunication networks.

The computing unit 1101 may be various general-purpose and/or special-purpose processing components with processing and computing capabilities. Some examples of the computing unit 1101 include, but are not limited to, central processing unit (CPU), graphics processing unit (GPU), various special-purpose artificial intelligence (AI) computing chips, various computing units that run machine learning model algorithms, and digital signal processor (DSP), and any appropriate processor, controller, microcontroller, etc. The computing unit 1101 executes the various methods and processes described above, for example, a vehicle-based voice processing method. For example, in some embodiments, the vehicle-based voice processing method may be implemented as a computer software program, which is tangibly contained in a machine-readable medium, such as the storage unit 1108. In some embodiments, part or all of the computer program may be loaded and/or installed on the device 1100 via the ROM 1102 and/or the communicating unit 1109. When the computer program is loaded into the RAM 1103 and executed by the computing unit 1101, one or more steps of the vehicle-based voice processing methods described above can be executed. Alternatively, in other embodiments, the computing unit 1101 may be configured to perform the vehicle-based voice processing method in any other suitable manner (for example, by means of firmware).

Various implementations of the systems and technologies described herein can be implemented in digital electronic circuit systems, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various implementations may include being implemented in one or more computer programs, the one or more computer programs may be executed and/or interpreted on a programmable system including at least one programmable processor, the programmable processor can be a special-purpose or general-purpose programmable processor that can receive data and instructions from the memory system, at least one input apparatus, and at least one output apparatus, and transmit the data and instructions to the memory system, the at least one input apparatus, and the at least one output apparatus.

The program code used to implement the method of the present disclosure can be written in any combination of one or more programming languages. These program codes can be provided to the processors or controllers of general-purpose computers, special-purpose computers, or other programmable data processing devices, so that when the program codes are executed by the processors or controllers, the functions/operations specified in the flowcharts and/or block diagrams are implemented. The program codes can be executed entirely on the machine, partly executed on the machine, partly executed on the machine and partly executed on the remote machine as an independent software package, or entirely executed on the remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combinations of the above. More specific examples of machine-readable storage medium might include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the above.

To provide interaction with a user, the systems and techniques described herein can be implemented on a computer having: a display apparatus (e.g., a CRT (cathode ray tube) or LCD (liquid crystal display) monitor) for displaying information to the user; and a keyboard and pointing device (e.g., a mouse or a trackball) through which the user can provide input to the computer. Other types of apparatuses can also be used to provide interaction with the user; for example, the feedback provided to the user can be any form of sensory feedback (for example, visual feedback, auditory feedback, or tactile feedback); and can be in any form (including acoustic input, voice input, or tactile input) to receive input from the user.

The systems and technologies described herein can be implemented in a computing system including background components (e.g., as a data server), a computing system including middleware components (e.g., an application server), or a computing system including front-end components (e.g., a user computer with a graphical user interface or a web browser through which users can interact with embodiments of the systems and technologies described herein), or a computing system include any combination of such background components, middleware components, or front-end components. Components of the system can be connected to each other through digital data communication in any form or medium (e.g., a communication network). Examples of communication networks include: local area network (LAN), wide area network (WAN), the Internet, and blockchain networks.

The computer system can include a client and a server. The client and server are generally far away from each other and usually interact through a communication network. The relationship between the client and the server is generated by computer programs that run on the corresponding computers and have a client-server relationship with each other. The server can be a cloud server (also known as a cloud computing server or a cloud host), a host product in the cloud computing service system to solve the defects of difficult management and weak business scalability in traditional physical host and VPS service ("Virtual Private Server", or "VPS" for short). The server can also be a server of a distributed system, or a server combined with a blockchain.

According to another aspect of the embodiments of the present application, the embodiments of the present application also provide a computer program product, including a computer program. The computer program, when executed by a processor, implements the method described in any one of the above embodiments, for example, the method shown in any one of the embodiments in FIG. 2 to FIG. 4.

According to another aspect of the embodiments of the present application, the embodiments of the present application also provide a vehicle that includes a voice processor as described in any of the above embodiments, such as the voice processor shown in FIG. 6, and a vehicle-mounted processor described in any of the above embodiments, such as the vehicle-mounted processor shown in any one of the embodiments in FIG. 7 to FIG. 10.

It should be understood that steps can be reordered, added or deleted using the various forms of processes shown above. For example, the steps recited in the present application can be executed in parallel, sequentially or in a different order. So long as the desired result of the technical solution disclosed in the present application can be achieved, no limitation is made herein.

The above-mentioned detailed description does not limit the protection scope of the present application. It should be understood by those skilled in the art that various modifications, combinations, sub-combinations and substitutions can be made according to design requirements and other factors. Any modification, equivalent substitution, improvement and the like made within the spirit and principle of the present application shall be included in the protection scope of the present application.

## Claims

1. A vehicle-based voice processing method, which is applied to a voice processor in a vehicle, wherein the vehicle is provided with the voice processor and a vehicle-mounted processor, and the voice processor supports audio processing methods for a variety of multi-sound zone types, the method comprises:
receiving (S201, S403) a voice message transmitted by the vehicle-mounted processor based on a plurality of audio channels, wherein the voice message carries identifiers of the plurality of audio channels;
determining (S202, S404) a multi-sound zone type corresponding to the voice message according to the identifiers of each audio channel in the voice message; and
invoking (S203, S405) an audio processing method corresponding to the multi-sound zone type corresponding to the voice message to process the voice message, so as to obtain a processing result.

2. The method according to claim 1, wherein the determining (S202, S404) the multi-sound zone type corresponding to the voice message according to the identifiers of each audio channel in the voice message comprises:
determining, according to a preset mapping relationship, a multi-sound zone type corresponding to a combination formed by the identifiers of each audio channel in the voice message; wherein the mapping relationship is a mapping relationship between different combinations formed by the identifiers of audio channels and different multi-sound zone types; or,
determining, according to a total quantity of the identifiers of audio channels in the voice message, a multi-sound zone type corresponding to the total quantity.

3. The method according to claim 1, wherein the voice message comprises multi-channel audio signals and multi-channel reference signals, and one-channel signal is transmitted by one audio channel; wherein the determining (S202, S404) the multi-sound zone type corresponding to the voice message according to the identifiers of each audio channel in the voice message comprises:
determining a multi-sound zone type corresponding to the voice message according to the identifiers of each audio channel for transmitting the multi-channel audio signals; and/or,
determining a multi-sound zone type corresponding to the voice message according to the identifiers of each audio channel for transmitting the multi-channel reference signals,
preferably, wherein the determining the multi-sound zone type corresponding to the voice message according to the identifiers of each audio channel for transmitting the multi-channel audio signals comprises:
determining the multi-sound zone type corresponding to the voice message based on a quantity of the identifiers of each audio channel that transmits the multi-channel audio signals;
preferably, wherein the determining the multi-sound zone type corresponding to the voice message according to the identifiers of each audio channel for transmitting the multi-channel reference signals comprises:
determining the multi-sound zone type corresponding to the voice message based on a quantity of the identifiers of each audio channel that transmits the multi-channel reference signals.

4. The method according to any one of claims 1 to 3, wherein the voice message comprises multi-channel audio signals and multi-channel reference signals; wherein an adjacent audio channel of an audio channel for transmitting an audio signal is an audio channel for transmitting a reference signal.

5. The method according to any one of claims 1 to 3, wherein the voice message comprises an audio signal and a reference signal;
in a case that the multi-sound zone type supported by the vehicle-mounted processor is a dual-sound zone type, a quantity of the plurality of audio channels is four, and a first audio channel and a third audio channel are configured to transmit the audio signals, and a second audio channel and a fourth audio channel are configured to transmit the reference signals; or
in a case that the multi-sound zone type supported by the vehicle-mounted processor is a four-sound zone type, a quantity of the plurality of audio channels is eight, and a first audio channel, a third audio channel, a fifth audio channel and a seventh audio channel configured to transmit the audio signals, and a second audio channel, a fourth audio channel, a sixth audio channel, and an eighth audio channel are configured to transmit the reference signals.

6. The method according to any one of claims 1 to 3, wherein a total quantity of audio channels between the vehicle-mounted processor and the voice processor is greater than or equal to a quantity of audio channels corresponding to a highest-level multi-sound zone type.

7. A vehicle-based voice processing method, which is applied to a vehicle-mounted processor in a vehicle, wherein the vehicle is provided with a voice processor and the vehicle-mounted processor, and the voice processor supports a variety of multi-sound zone types, the method comprises:
determining (S301, S401) according to the multi-sound zone type supported by the vehicle-mounted processor, a plurality of audio channels for transmitting a received voice message;
transmitting (S302, S402) the voice message to the voice processor based on the plurality of audio channels;
wherein the voice message is configured to determine a multi-sound zone type corresponding to the voice message according to identifiers of each audio channel in the voice message; and the multi-sound zone type corresponding to the voice message is used to process the voice message according to an audio processing method corresponding to the multi-sound zone type corresponding to the voice message, so as to obtain a processing result.

8. The method according to claim 7, wherein:
each audio channel corresponds to a unique identifier of an audio channel; the determining (S301, S401) according to the multi-sound zone type supported by the vehicle-mounted processor, the plurality of audio channels for transmitting the received voice message comprises: determining a combination formed by the identifiers of each audio channel for transmitting the voice message corresponding to the multi-sound zone type supported by the vehicle-mounted processor according to a preset mapping relationship, and determining the plurality of audio channels for transmitting the voice message according to the formed combination; wherein the mapping relationship is a mapping relationship between different combinations formed by the identifiers of audio channels and different multi-sound zone types; or,
wherein the determining, according to the multi-sound zone type supported by the vehicle-mounted processor, the plurality of audio channels for transmitting the received voice message comprises: determining a quantity of audio channels for transmitting the voice message according to the multi-sound zone type supported by the vehicle-mounted processor, and selecting the plurality of audio channels for transmitting the voice message from a plurality of preset audio channels according to the quantity of audio channels.

9. The method according to claim 7, wherein the voice message comprises multi-channel audio signals and multi-channel reference signals, and one-channel signal is transmitted by one audio channel; wherein the determining (S301, S401) according to the multi-sound zone type supported by the vehicle-mounted processor, the plurality of audio channels for transmitting the received voice message comprises:
according to the multi-sound zone type supported by the vehicle-mounted processor, determining each audio channel for transmitting the multi-channel audio signals, and determining each audio channel for transmitting the multi-channel reference signal.

10. The method according to claim 9, wherein the determining (S301, S401) according to the multi-sound zone type supported by the vehicle-mounted processor, the plurality of audio channels for transmitting the received voice message comprises:
determining a quantity of the audio channels for transmitting the multi-channel audio signals according to the multi-sound zone type supported by the vehicle-mounted processor; and determining identifiers of the audio channels for transmitting the multi-channel audio signals according to the quantity of audio channels for transmitting the multi-channel audio signals, and selecting each audio channel for transmitting the multi-channel audio signals from each audio channel based on the determined identifiers; or,
determining a quantity of the audio channels for transmitting the multi-channel reference signals according to the multi-sound zone type supported by the vehicle-mounted processor; and determining identifiers of the audio channels for transmitting the multi-channel reference signals according to the quantity of audio channels for transmitting the multi-channel reference signals, and selecting each audio channel for transmitting the multi-channel reference signals from each audio channel based on the determined identifiers.

11. The method according to any one of claims 7 to 10, wherein the voice message comprises multi-channel audio signals and multi-channel reference signals; wherein an adjacent audio channel of an audio channel for transmitting an audio signal is an audio channel for transmitting a reference signal.

12. The method according to any one of claims 7 to 10, wherein the voice message comprises an audio signal and a reference signal;
in a case that the multi-sound zone type supported by the vehicle-mounted processor is a dual-sound zone type, a quantity of the plurality of audio channels is four, and a first audio channel and a third audio channel are configured to transmit the audio signals, and a second audio channel and a fourth audio channel are configured to transmit the reference signals; or,
in a case that the multi-sound zone type supported by the vehicle-mounted processor is a four-sound zone type, a quantity of the plurality of audio channels is eight, and a first audio channel, a third audio channel, a fifth audio channel and a seventh audio channel configured to transmit the audio signals, and a second audio channel, a fourth audio channel, a sixth audio channel, and an eighth audio channel are configured to transmit the reference signals.

13. The method according to any one of claims 7 to 10, wherein a total quantity of audio channels between the vehicle-mounted processor and the voice processor is greater than or equal to a quantity of audio channels corresponding to a highest-level multi-sound zone type.

14. A voice processor (600), the voice processor (600) is provided in a vehicle, the vehicle is further provided with a vehicle-mounted processor, the voice processor (600) supports audio processing methods for a variety of multi-sound zone types, the voice processor (600) comprises:
a receiving module (601), configured to receive a voice message transmitted by the vehicle-mounted processor based on a plurality of audio channels, wherein the voice message carries identifiers of the plurality of audio channels;
a first determining module (602), configured to determine a multi-sound zone type corresponding to the voice message according to the identifiers of each audio channel in the voice message;
an invoking module (603), configured to invoke an audio processing method corresponding to the multi-sound zone type corresponding to the voice message; and
a processing module (604), configured to process the voice message according to the invoked audio processing method to obtain a processing result.

15. The voice processor (600) according to claim 14, wherein the first determining module (602) is configured to determine, according to a preset mapping relationship, a multi-sound zone type corresponding to a combination formed by the identifiers of each audio channel in the voice message; wherein the mapping relationship is a mapping relationship between different combinations formed by the identifiers of audio channels and different multi-sound zone types; or the first determining module (602) is configured to determine, according to a total quantity of the identifiers of audio channels in the voice message, a multi-sound zone type corresponding to the total quantity.

16. A vehicle-mounted processor (700), the vehicle-mounted processor (700) is provided in a vehicle, the vehicle is further provided with a voice processor, the voice processor supports a variety of multi-sound zone types, and the vehicle-mounted processor (700) comprises:
a second determining module (701), configured to determine, according to the multi-sound zone type supported by the vehicle-mounted processor (700), a plurality of audio channels for transmitting a received voice message;
a transmitting module (702), configured to transmit the voice message to the voice processor based on the plurality of audio channels;
wherein the voice message is configured to determine a multi-sound zone type corresponding to the voice message according to identifiers of each audio channel in the voice message; and the multi-sound zone type corresponding to the voice message is used to process the voice message according to an audio processing method corresponding to the multi-sound zone type corresponding to the voice message, so as to obtain a processing result.

17. The vehicle-mounted processor (700) according to claim 16, wherein:
each audio channel corresponds to a unique identifier of an audio channel; the second determining module (701) comprises: a combination determining sub-module (7011), configured to determine a combination formed by the identifiers of each audio channel for transmitting the voice message corresponding to the multi-sound zone type supported by the vehicle-mounted processor (700) according to a preset mapping relationship; and a channel determining sub-module (7012), configured to determine the plurality of audio channels for transmitting the voice message according to the formed combination; wherein the mapping relationship is a mapping relationship between different combinations formed by the identifiers of audio channels and different multi-sound zone types; or,
wherein the second determining module (701) comprises: a quantity determining sub-module (7013), configured to determine a quantity of audio channels for transmitting the voice message according to the multi-sound zone type supported by the vehicle-mounted processor (700); and a selecting sub-module (7014), configured to select a plurality of audio channels for transmitting the voice message from a plurality of preset audio channels according to the quantity of audio channels.

18. A non-transitory computer-readable storage medium storing computer instructions, wherein the computer instructions are used to enable a computer to execute the method of any one of claims 1-6; or,
the computer instructions are used to enable the computer to execute the method of any one of claims 7-13.

19. A computer program product, comprising a computer program, which, when executed by a processor, implements the method according to any one of claims 1-6; or,
the computer program, when executed by the processor, implements the method according to any one of claims 7-13.
